# EUROPEAN PATENT SPECIFICATION

(11) **EP 0 295 673 B1**
(45) Date of publication and mention of the grant of the patent: **05.01.1994**
(21) Application number: 88109615.0
(22) Date of filing: 16.06.1988
(51) Int. Cl.: G03G 15/32, G06K 15/12

(54) **Light scanning apparatus**
Lichtabtastgerät
Appareil de balayage optique

(30) Priority: 19.06.1987 JP 154021/87
(43) Date of publication of application: 21.12.1988
(73) Proprietor: FUJITSU LIMITED, Kawasaki-shi, Kanagawa 211 (JP)
(72) Inventor: Seto, Fumiaki c/o Fujitsu Limited, Nakahara-ku Kawasaki-shi Kanagawa 211 (JP)
(74) Representative: Sunderland, James Harry

(56) References cited:
- GB-A- 1 560 535
- GB-A- 2 104 449
- US-A- 3 644 665
- US-A- 4 327 990
- US-A- 4 656 524

## Description

The present invention relates to light scanning apparatus for example for reading or scanning an image, and more particularly to light scanning apparatus in which a light source providing light for the light scanning is continuously lit.

When an ultrasonic wave having an appropriate frequency is applied to an acousto-optic modulating element, light input to the element in an appropriate direction with regard to the propagation direction of the ultrasonic wave is deflected by an effect called Bragg Reflection whilst the light is passing through the element. Thus, for example in a high speed printer, etc., employing a gas laser as its light source, an acousto-optic modulating element has been employed for modulating, i.e. switching, the continuously output laser light. LEDs (light emitting diodes), which can be directly modulated, have also been employed as light sources. However, because of problems of poor matching with the light sensitivity spectrums of photosensitive drums, and because of short life problems, gas lasers are still important light sources.

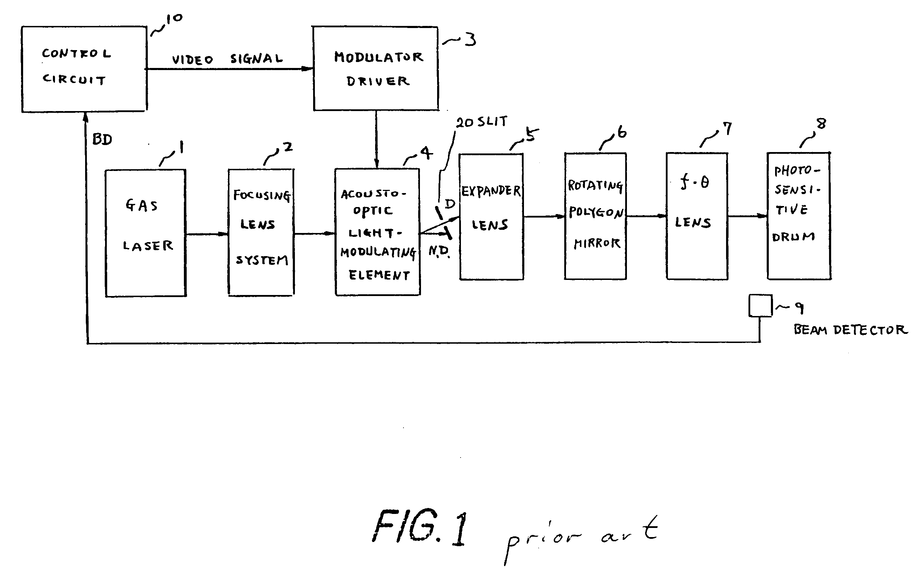

Fig. 1 is a schematic block diagram of a previously proposed laser printer system using an acousto-optic modulating element. Laser light produced by a gas laser 1 (a light source) is focussed by a focussing lens system 2 onto a surface of a crystal of an acousto-optic modulating element 4, details of which are given below, so as to form a fine light spot thereon.

When receiving an enabling signal from a control circuit 10, a modulator driver 3 outputs a modulating signal of approximately 200 MHz to the acousto-optic modulating element 4. The acousto-optic modulating element 4 deflects light input thereto coming from the focussing system 2, 2.3·10⁻² rad to a direction in which there are provided an expander lens system 5 and a slit 20 in front of the expander lens system 5.

However, when no modulating signal is being input thereto from the modulator driver 3, the acousto-optic modulating element 4 does not deflect the input light and accordingly does not output the light from the focussing system 2 to the expander lens system 5. In the Figures, deflected light is denoted by "D" (deflected) and not-deflected light is denoted by "N.D." (not deflected). In Fig. 1, light travelling in the direction of the arrow marked "D" reaches the expander lens 5; however, light travelling in the direction of the arrow marked "N.D." is directed onto the plate portion of the slit 20, i.e. is shut off. The light input to the expander lens system 5 is expanded to form a parallel light beam and input to rotating polygonal mirrors 6, by which the light is reflected so as to scan on a photo-sensitive drum 8. Before reaching the drum 8, the light deflected by the rotating mirrors 6 is focussed by an f·ϑ lens 7 so that the light spot on the drum 8 is uniformly fine. A light detector 9 located optically beside the photosensitive drum 8 detects the scanning light going to scan a single frame on the drum 8, and thereby transmits a detection signal BD (beam detection) to a control circuit 10. Then, the control circuit 10 allows a video signal to start transmitting signals sequentially to the modulator driver 3. Thus, on receiving a "1" level of the modulator driver signal, the acousto-optic modulating element 4 passes input light.

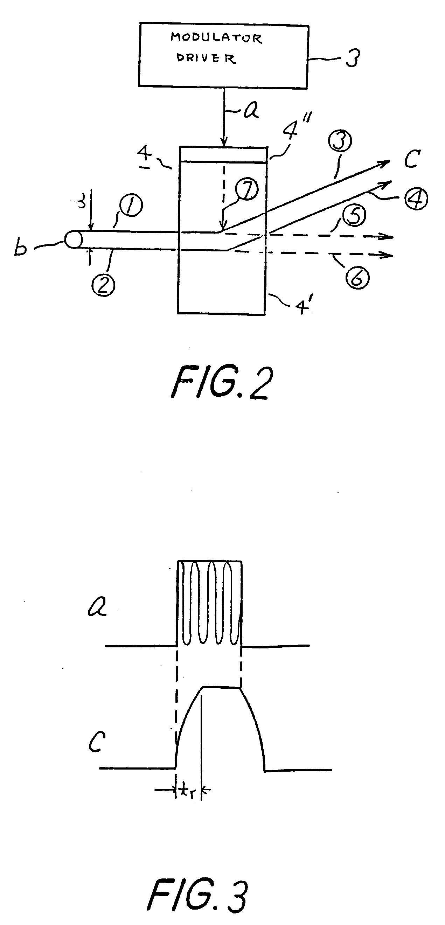

Referring to Figs. 2 and 3, structure and operation of an acousto-optic modulating element are explained in more detail. Fig. 2 schematically illustrates the structure of the acousto-optic modulating element. The acousto-optic light-modulating element 4 is composed of a crystal part 4′ made of lead molybdate (PbMoO₄) or tellurium dioxide (TeO₂) and an electro acoustic transducer 4˝ made of lithium niobate (LiNbO₃). Fig. 3 shows waveforms of an input modulating signal and of a deflected light output produced thereby. When a modulating signal "a" is not being applied to drive the acousto-optic modulating element 4 from the modulator driver 3, a laser light beam "b" input to the acousto-optic modulating element 4 travels straight through the crystal part of the element 4 and emerges as shown by broken lines 5 and 6 in Fig. 2. When a modulating signal "a" is applied to the electro-acoustic transducer 4′′ of the modulating element 4, an approximately 200 MHz ultrasonic wave generated therein propagates through the element 4 downwards in the Figure, i.e. approximately orthogonally to the direction of the input light beam "b", as indicated by arrow 7 . As soon as the front end of the ultrasonic wave reaches the upper edge 1 of the input light beam, the upper edge 1 of the light is deflected to go to the line 3 in a direction indicated by "c". It takes a time period tᵣ for the ultrasonic wave to reach the lower edge 2 of the input light beam "b" and to deflect the lower edge 2 of the input light beam to go to the line 4 . Therefore, rise and fall of the waveform of the deflected light pulse, i.e. the output of the acousto-optic modulating element 4, is delayed and deformed as indicated by "c" in Fig. 3. The delay time, i.e. the rise time, tᵣ is given by:

${\text{t}}_{\text{r}} \text{= 0.66 d / v}$

where d is the diameter of the input light beam "b", and v is the propagation velocity of the ultrasonic wave in the crystal part of the acousto-optic modulating element.

Therefore, in order to achieve a less deformed modulated light output, i.e. having a fast rising and falling edge, the diameter of the light spot is required to be as small as possible. If the light output pulse is deformed, a dot to be printed may be missed. Further, the recent trend for light scanning apparatus to be faster and to achieve a higher resolution, requires the light spot size, which was 100 micrometers (referred to hereinafter as µm) in diameter, now to be as fine as 30 µm. The smaller spot size means larger energy density of the focussed light, in inverse proportion of the square of the spot diameter. However, on the other hand, allowable light input to the acousto-optic modulating element is limited by the input light energy density thereto as well as by the accumulated duration of the light input. As a measure for dealing with this problem, a mechanical shutter preventing light input during periods when no modulation signal is generated may be provided between the light focussing system 2 and the acousto-optic modulating element 4. However, achievable shutter speed is too slow to be satisfactory and the durability of the shutter is less than satisfactory. Moreover, a solenoid used to drive a mechanical shutter generates electrical noise which disturbs other electronic circuits.

Reference is made to Japanese Laid-open provisional patent publication Sho 61-165775.

According to the present invention, there is provided light-scanning apparatus, comprising:-
a light source,
focussing means, arranged for focussing light from the light source,
acousto-optic light-modulating means, arranged for receiving focussed light, from the focussing means, operable to switch the light passing therethrough, and
a modulator driver circuit for providing a modulating signal to the acousto-optic light-modulating means, for switching light passing therethrough,
characterised by:-
an optical switch provided between the light source and the focussing means, operable to switch the light passing to the focussing means, and
a gate circuit operable to electronically control the optical switch.

An embodiment of the present invention can provide a high speed, as well as high resolution, light scanning apparatus employing an acousto-optic modulating element which has a long life in use, whilst employing a continuously lit light source, such as a gas laser.

Reference is made, by way of example, to the accompanying drawings, in which:-
Fig. 1 is a schematic block diagram of a previously proposed laser printer system using an acousto-optic modulating element,
Fig. 2 schematically illustrates the structure of an acousto-optic modulating element,
Fig. 3 illustrates waveforms of an input modulating signal and output light of an acousto-optic modulating element,
Fig. 4 is a schematic block diagram illustrating in outline an embodiment of the present invention,
Fig. 5 is a schematic block diagram of a laser printer employing an embodiment of the present invention,
Fig. 6 is a bird's-eye perspective view of a laser printer employing an embodiment of the present invention,
Fig. 7 schematically illustrates light paths in the laser printer of Fig. 6,
Fig. 8 is a chart illustrating waveforms and timings of signal pulses arising in the apparatus of Fig. 5,
Fig. 9 is a chart for assistance in explaining the programming or derivation of a print signal with regard to video signal pulses, and
Fig. 10 is a schematic block diagram of a circuit for producing those print signals.

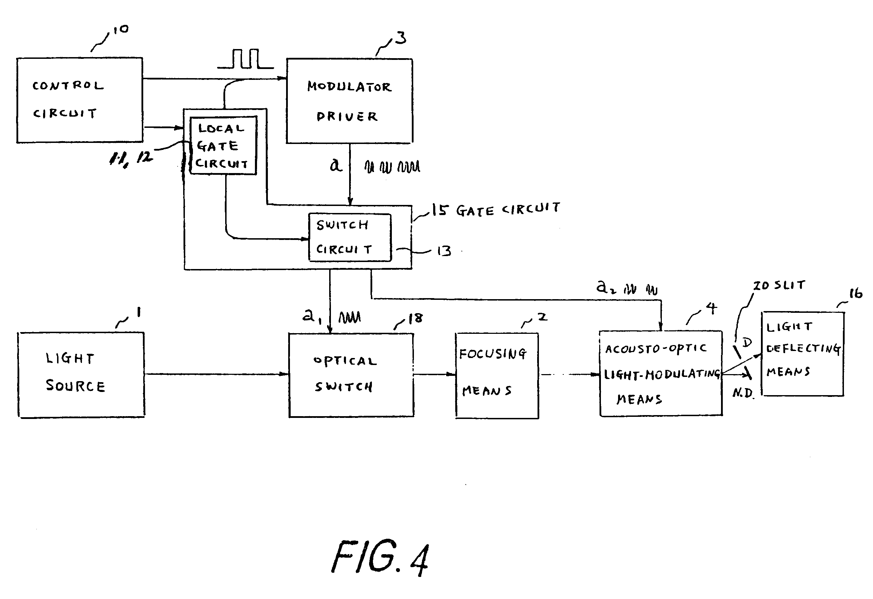

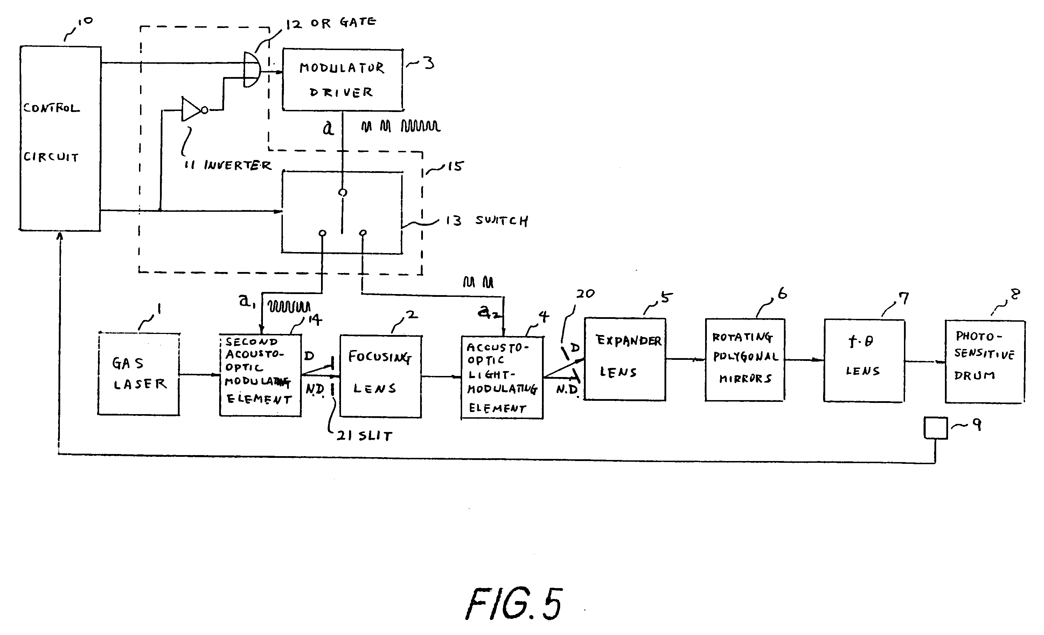

An embodiment of the present invention is schematically illustrated in Fig. 4. An additional optical switch, which may be composed of an acousto-optic modulating element 18, is provided between light source 1, for example a gas laser, and light focussing means 2. A gate circuit 15 is additionally provided to control the additional optical switch (acousto-optic modulating means) 18 so as to shut off the input light, for example according to a preprogrammed schedule or predetermined manner in dependence upon the length of blank video signals continuously coming in to be printed. The gate circuit 15 comprises a switch circuit 13 and a local gate circuit. Such items will be explained in more detail with reference to Fig. 5 below. Though the size of light spot incident onto the original acousto-optic light-modulating element (4) is reduced, i.e. light energy density is increased, the duration of the light input to that element is also reduced giving as a result a longer life for the element. The reduced light spot size permits increased resolution of printing, etc., without sacrificing the life of the acousto-optic light-modulating element 4. The light energy density to which the additional acousto-optic modulating element is subjected is low enough that a long life is provided for the element even though light is continuously input to the element.

Light deflected at the original acousto-optic light-modulating element (4) passes via slit 20 to light deflecting means 16 for further utilisation. If light is not deflected at the element 4 it is shut off as in the arrangement of Fig. 1.

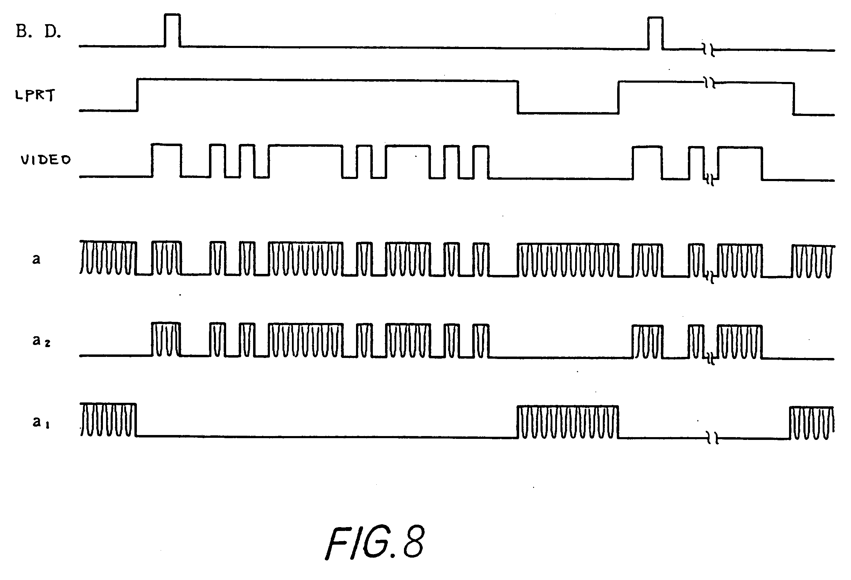

A schematic block diagram of a laser printer embodying the present invention is given in Fig. 5. Waveforms of signals occurring in the printer of Fig. 5 are shown in Fig. 8. The same reference signs as are used in Fig. 1 to Fig. 4 designate the same or similar parts in Fig. 5.

A light source 1 is a gas laser, for example an argon (Ar⁺), a helium-neon (HeNe) or a helium-cadmium (HeCd) laser. The output light beam of the light source 1 is continuously input to the second acousto-optic light-modulating element 14 (the first such element being element 4), without being finely focussed, i.e. approximately 600 µm in diameter. On the other hand, when the light reflected by rotating polygonal mirror 6 scans photo-sensitive drum 8, the light also scans beam detector 9 located optically beside, typically just before, the photo-sensitive drum 8. Then, beam detector 9 outputs a detection signal BD, which relates to a timing at which the light is to begin scanning a single frame on drum 8. In control circuit 10 output of a video signal VIDEO is allowed using this detection signal and when a "1" level of a print signal LPRT is provided. The video signal is output to the modulator driver 3 through an OR gate 12, which OR gate together with an inverter 11 provides a local gate circuit. Details and varieties of possible programming or logic for controlling the printer signal LPRT are described below. The video signal, a sequence of pulses, typically of approximately 28.5 ns width each for a single dot printing, enables the modulator driver 3 to output and approximately 200 MHz modulating signal "a" during the applied video signal pulse width, as shown in Fig. 8.

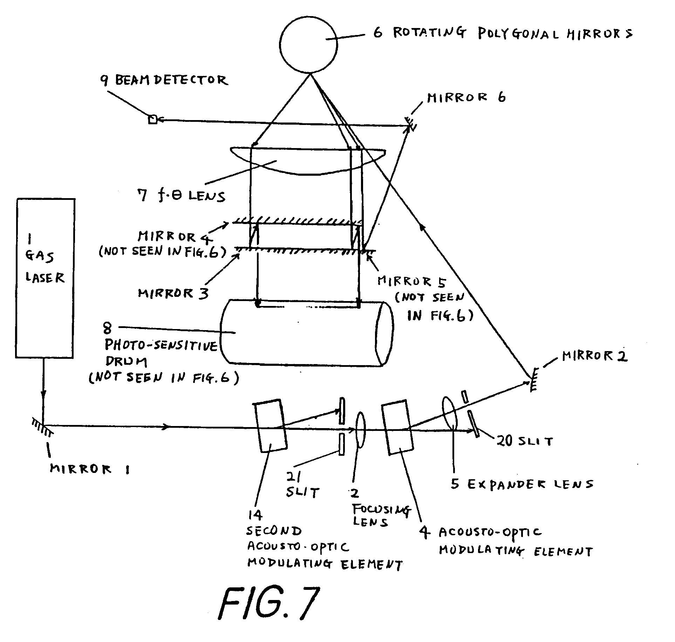

Switch circuit 13 is arranged so as to deliver the modulating signal "a" to the first acousto-optic light-modulating element 4 as a signal "a₂" when a "1" level of print signal LPRT is being received, while none of the modulating signal "a" is delivered to the second acousto-optic light-modulating element 14. When receiving no modulating signal, the second acousto-optic light-modulating element 14 allows light input from the light source 1 to pass therethrough without being deflected, as indicated an arrow "N.D.", to a focussing lens system 2. The light input to the focussing lens system 2 is focussed onto the first acousto-optic light-modulating element 4 to form a light spot as fine as 30 µm. On receiving the modulating signal "a₂", the first acousto-optic light-modulating element 4 deflects the input light from the focussing lens system 2 as indicated by an arrow "D". In the direction of the deflected light "D", there are located a slit 20 and an expander lens 5 therebehind (which is omitted in Fig. 4). Therefore, only the deflected light, i.e. modulated light, is input through the slit 20 to the succeeding system. When no modulating signal is provided to the first acousto-optic light-modulating element 4, the light input to the first acousto-optic light-modulating element 4 passes straight through the element 4 without being deflected, as indicated by an arrow "N.D.", onto a plate portion of the slit 20; in other words, the light "N.D." is shut off. The light input to expander lens 5 is expanded to form a parallel beam and is projected onto rotating polygonal mirrors 6. The light beam projected onto the polygonal mirrors 6 is reflected to scan the f·ϑ lens 7. The light beam input onto the polygonal mirrors 6 is uniformly focussed onto a photosensitive drum 8, generally formed of selenium (Se) and tellurium (Te) alloy, and the focussed light spot scans a ridgeline of the photosensitive drum 8 (illustrated in Fig. 7) and thereby an electrostatic latent image is produced thereon, according to the input video signals.

On the other hand, a "0" level of the print signal LPRT is inverted by the inverter 11 to enable the modulator driver 3 through the OR gate 12. At the same time, the "0" level of the print signal LPRT makes the switch circuit 13 deliver the modulation signal "a" from the modulator driver 3 to the second acousto-optic light-modulating element 14 as a modulating signal "a₁", while delivering none of the modulating signal "a₂" to the first acousto-optic light-modulating element 4. On receiving the modulation signal "a₁", the second acousto-optic light-modulating element 14 deflects the input light thereto approximately 2.3·10⁻² rad as indicated by an arrow "D". The deflected light "D" is directed onto a plate portion of the slit 21, i.e. is shut off. Accordingly, no light is input to the first acousto-optic light-modulating element 4. Duration of a "0" level of the print signal LPRT may be programmed, for example, for a stand-by period waiting for the start of the printing operation, a fly-back period, or a period during which blank signals, i.e. "0" level video signals, continue for more than eight bits. In other words, in the latter case, the print signal LPRT becomes "1" level eight bits prior to the start, and is "1" for eight dots after the end, of "1" level video signals. This number of bits or dots (eight) is chosen in consideration of the slow rise and fall applicable to the second acousto-optic light-modulating element 14 which handles a large light spot size. The print signal LPRT, as well as the video signal, is also made "1" as a matter of routine by a timer which measures the time elapsing after the previous frame and indicates the timing at which the circuit must be ready to start scanning a new frame, i.e. so that the paths are open for the light to reach the beam detector 9.

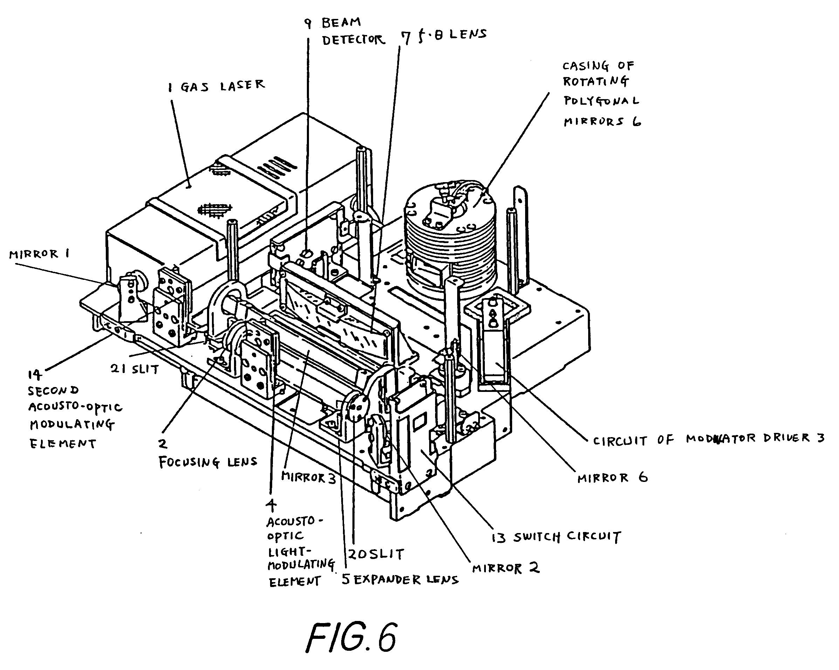

A bird's-eye perspective view of a laser printer, as a practical configuration of an embodiment of the present invention, is shown in Fig. 6. Light paths in Fig. 6 are schematically illustrated in Fig. 7.

Strictly speaking, light input to acousto-optic light-modulating elements is slanted at a predetermined angle as indicated in Fig 7.

Further, for simplifying the explanation, the location of slit 20 in Figs. 4 and 5 is drawn just after acousto-optic light-modulating element 4, though in Figs. 6 and 7 it is located after expander lens 5.

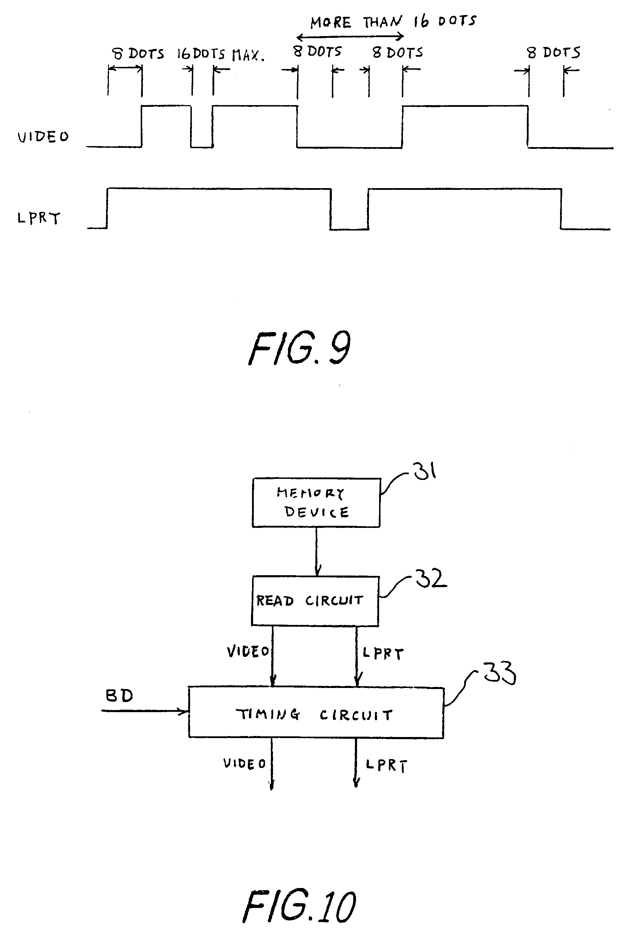

For a case in which the print signal LPRT is programmed or derived depending on the video signals, a circuit as indicated in Fig. 10 is additionally included in the control circuit 10. Data to be printed is first stored in a memory device 31, typically a semiconductor RAM (random access memory). Print data for a single frame is read out by a read circuit 32 from the memory device 31. The read circuit 32 also checks the data sequentially eight bits in advance. When all of the eight bits in advance are "0" level, the print signal LPRT becomes "0". When a "1" level bit is read out in the eight-bit advance, the print signal becomes "1". Furthermore, the read circuit 32 counts continuous "0" video signal bits currently being printed. When it counts eight, the print signal LPRT becomes "0". A timing circuit 33, receiving also detection signal BD, controls passage of the video and LPRT signals.

Fig. 9 illustrates the relationship between video and LPRT signals.

Supposing that the scan width of the light in a laser printer embodying the present invention is 16 inches (1 inch = 25.4mm), and the lengths of printed lines of characters correspond to 15 inches width and 8 inches width, the blank areas at the two ends of a line correspond to 7% and 50%, respectively, of the scan width. Even for the 15-inch width, when considering also line spaces, the black portion, i e. the portion to be printed, is as little as several percent of the entire light scanning width.

Consequently, the duration of the light input to the first acousto-optic light-modulating element 4 can be reduced to several percent, which means the life of the first acousto-optic light-modulating element 4 is extended to more than ten times its life in a case in which the present invention is not applied. This advantage compensates for the shortened life expectancy caused by increased light energy density resulting from reduction of spot size focussed on the first acousto-optic light-modulating element. The light beam input to the second acousto-optic light-modulating element 14 is broad, i.e. the light energy density is sufficiently low for the element to be durable, even though light is continuously input thereto.

The achievement of a 30 µm diameter spot onto the acousto-optic light-modulating element 4 without sacrificing life expectancy, can afford a printing resolution as much as 2.6 times better than that achieved with a 100 µm diameter spot, without sacrificing the scan speed.

Switching of the second acousto-optic light-modulating element 14 is not required to be as fast as that of the first acousto-optic light-modulating element 4; therefore, the second acousto-optic light-modulating element 14 can be of a lower specification level, i.e. of a lower cost, as long as the same modulation frequency is usable.

Locations of the slits 20 and 21 as seen in the Figures are only exemplary. The slits may be located at places other than those above-described, or may be omitted, as long as the function of the optical switch is fully performed.

Although, in the description given above, the second acousto-optic light-modulating element 14 is open/shut before/after continuous eight dots of blank signals, this number of dots may be chosen to be other than eight, so long as the response of the second acousto-optic light-modulating element does not disturb the switching of the first acousto-optic light-modulating element.

Although in the embodiments described above essentially the same kind of acousto-optic light-modulating element as the first element 4 is used for the second acousto-optic light-modulating element 14 and both of those elements are driven by the same modulator driver, a different kind of the optical switch, such as a liquid crystal, may be used, driven by an independent driver, in place of the second acousto-optic light-modulating element 14 in embodiments of the present invention.

Though in the above-described embodiments, polygonal mirrors are employed for scanning light, other types of scanning device, such as galvano mirrors, may be employed.

Though a laser printer is referred to in the above description, light scanning apparatus embodying the present invention may be applied in other contexts, for example to writing data on a photo film, or to an optical character/image reader, or to a display device of a high-resolution television receiver. In other words, though in the described embodiments the light switched by the first acousto-optic light-modulating element 4 is scanned to be input to a light-sensitive drum 8, this light-sensitive drum 8 may be replaced by a photo microfilm on which an image or character is to be recorded, or a character or an image which is to be optically read out, or an optical system which projects the scanned light on to a screen as a television screen. When this light scanning apparatus is used for the character/image reader or television projection, the light must be scanned not only in a horizontal direction (as along the ridgeline of the light-sensitive drum) but also in a vertical direction by the rotating polygonal mirrors, or the character/image to be read out is fed vertically.

In light scanning apparatus, for example in a laser printer, embodying the present invention, an optical switch, which may be an acousto-optic light-modulating element, is additionally provided between the light source and an original acousto-optic light-modulating element for modulating the light according to the data to be printed. The additional optical switch shuts off the continuously input light from the light source according to a predetermined schedule, such as if there are eight bits or more before the start of black dots for printing, and at eight bits after the end of the black dots, or in a stand-by period. The duration of the light input to the original acousto-optic light-modulating element, onto which a fine light spot is focussed, is thus shortened. Accordingly, the short life of the original acousto-optic light-modulating element, resulting from the fine spot size, is compensated by the shortened input light duration. Achievement of the fine spot size allows finer printing out resolution without sacrificing scan speed or life of the element. The light spot which is incident on the additional optical switch is wide enough for the element to have a long life. This can be applied also to character/image readers, microfilm recording, or high-resolution television projection.

An embodiment of the present invention provides a light scanning apparatus comprising:-
a light source for emitting a light;
focussing means for focussing said light;
first acousto-optic light-modulating means for switching said light focussed thereon to pass therethrough;
either (a) light-reflecting means for reflecting said light passing through said first acousto-optic light-modulating means, said reflected light being scanned by rotation of said reflecting means, or (b) light-sensitive means for producing an electrostatic image thereon by receiving said light passing through said first acousto-optic light-modulating means; and
a modulator driver circuit for outputting a modulating signal to said first acousto-optic light-modulating means to allow passing said light input thereto;
further comprising:-
an electronically controlled optical switch provided between said light source and said focussing means, for switching said light from said light source to pass therethrough; and
a gate circuit for controlling said optical switch to pass said light according to a predetermined program.

The optical switch may be a second acousto-optic light-modulating means.

The gate circuit may include:-
a switch circuit for switching said modulating signal between said first acousto-optic light-modulating means and said second acousto-optic light-modulating means; and
a local gate circuit for controlling said switch circuit as well as for enabling said modulator driver,
whereby said second acousto-optic light-modulating means switches the light input thereto by deflecting said light input when driven by said modulating signal received from said modulator driver which is enabled by said local gate circuit, as well as said first acousto-optic light-modulating means switching the light input thereto by deflecting said light input when driven by said modulating signal while said second acousto-optic light-modulating means passes light.

## Claims

1. Light-scanning apparatus, comprising:-
a light source (1),
focussing means (2), arranged for focussing light from the light source,
acousto-optic light-modulating means (4), arranged for receiving focussed light, from the focussing means, operable to switch the light passing therethrough, and
a modulator driver circuit (3) for providing a modulating signal to the acousto-optic light-modulating means, for switching light passing therethrough,
characterized by:-
an optical switch (18) provided between the light source (1) and the focussing means (2), operable to switch the light passing to the focussing means, and
a gate circuit (15) operable to electronically control the optical switch.

2. Apparatus as claimed in claim 1, wherein the optical switch comprises acousto-optic light-modulating means (14).

3. Apparatus as claimed in claim 2, wherein the acousto-optic light-modulating means (14) of the optical switch is a device essentially similar to the acousto-optic light-modulating means (4) which receives focussed light.

4. Apparatus as claimed in claim 1, 2 or 3, further comprising light-reflecting means (6), arranged for reflecting light delivered thereto via the acousto-optic light-modulating means (4) which receives focussed light, the reflected light being scanned by rotation of the light-reflecting means.

5. Apparatus as claimed in claim 4, wherein the light-reflecting means comprises rotatable polygonal mirrors.

6. Apparatus as claimed in claim 4, wherein the light-reflecting means comprises a galvano mirror.

7. Apparatus as claimed in claim 1, 2 or 3, further comprising light-sensitive means (8) for producing an electrostatic image thereon in response to reception of light delivered there to via the acousto-optic light-modulating means (4) which receives focussed light.

8. Apparatus as claimed in claim 7, wherein the light sensitive means is a light-sensitive drum on a ridgeline of which light is to be uniformly focussed.

9. Apparatus as claimed in any preceding claim, wherein the gate circuit (15) includes,
a switch circuit (13) arranged to receive the modulating signal provided by the modulator driver circuit (3) and operable to switch that signal from one to the other of the optical switch and the acousto-optic light-modulating means (4) which receives focussed light,
a local gate circuit (11,12) operable to control the switch circuit and to enable the modulator driver circuit.

10. Apparatus as claimed in any preceding claim, wherein the gate circuit (15) is operable to switch the optical switch (18) so that light from the light source (1) does not reach the focussing means (2) when the apparatus a standby condition.

11. Apparatus as claimed in any preceding claim, wherein the gate circuit (15) is operable to switch the optical switch (18) so that light from the light source (1) does not reach the focussing means (2) when a video signal bit train, in dependence upon which the modulating signal is provided, contains a sequence of bits, of at least a predetermined length, in which light is not required to be delivered from the acousto-optic light-modulating means (4).

12. Apparatus as claimed in claim 11, wherein the predetermined length is eight bits.

## Patentansprüche

1. Eine Lichtscanvorrichtung mit:-
einer Lichtquelle (1),
einem Fokussiermittel (2), das zum Fokussieren von Licht von der Lichtquelle angeordnet ist,
einem akusto-optischen Lichtmodulationsmittel (4), das zum Empfangen von fokussiertem Licht von dem Fokussiermittel angeordnet ist und betriebsfähig ist, um das hindurchtretende Licht zu schalten, und
einer Modulatortreiberschaltung (3) zum Bereitstellen eines Modulationssignals für das akusto-optische Lichtmodulationsmittel zum Schalten von hindurchtretendem Licht,
gekennzeichnet durch:-
einen optischen Schalter (18), der zwischen der Lichtquelle (1) und dem Fokussiermittel (2) vorgesehen ist und der betriebsfähig ist, um das zu dem Fokussiermittel passierende Licht zu schalten, und
eine Gatterschaltung (15), die betriebsfähig ist, um den optischen Schalter elektronisch zu steuern.

2. Vorrichtung nach Anspruch 1, bei der der optische Schalter ein akusto-optisches Lichtmodulationsmittel (14) umfaßt.

3. Vorrichtung nach Anspruch 2, bei der das akusto-optische Lichtmodulationsmittel (14) des optischen Schalters eine Anordnung ist, die dem akusto-optischen Lichtmodulationsmittel (4), das fokussiertes Licht empfängt, im wesentlichen ähnlich ist.

4. Vorrichtung nach Anspruch 1, 2 oder 3, die ferner ein lichtreflektierendes Mittel (6) umfaßt, das zum Reflektieren von Licht angeordnet ist, das ihm über das akusto-optische Lichtmodulationsmittel (4), das fokussiertes Licht empfängt, zugeführt wurde, wobei das reflektierte Licht durch Rotation des lichtreflektierenden Mittels gescannt wird.

5. Vorrichtung nach Anspruch 4, bei der das lichtreflektierende Mittel rotierbare Polygonspiegel umfaßt.

6. Vorrichtung nach Anspruch 4, bei der das lichtreflektierende Mittel einen Galvanospiegel umfaßt.

7. Vorrichtung nach Anspruch 1, 2 oder 3, die ferner ein lichtempfindliches Mittel (8) zum Erzeugen eines elektrostatischen Bildes auf ihm umfaßt, als Reaktion auf den Empfang von Licht, das ihm über das akusto-optische Lichtmodulationsmittel (4), das fokussiertes Licht empfängt, zugeführt wurde.

8. Vorrichtung nach Anspruch 7, bei der das lichtempfindliche Mittel eine lichtempfindliche Trommel ist, auf deren Kammlinie Licht gleichförmig zu fokussieren ist.

9. Vorrichtung nach irgendeinem vorhergehenden Anspruch, bei der die Gatterschaltung (15) enthält:-
einen Schalterstromkreis (13), der angeordnet ist, um das Modulationssignal zu empfangen, das durch die Modulatortreiberschaltung (3) bereitgestellt wurde, und der betriebsfähig ist, um jenes Signal von dem einen zu dem anderen des optischen Schalters und des akusto-optischen Lichtmodulationsmittels (4) zu schalten, das fokussiertes Licht empfängt,
eine lokale Gatterschaltung (11, 12), die betriebsfähig ist, um den Schalterstromkreis zu steuern und die Modulatortreiberschaltung freizugeben.

10. Vorrichtung nach irgendeinem vorhergehenden Anspruch, bei der die Gatterschaltung (15) betriebsfähig ist, um den optischen Schalter (18) so zu schalten, daß Licht von der Lichtquelle (1) das Fokussiermittel (2) nicht erreicht, wenn die Vorrichtung in einem Bereitschaftszustand ist.

11. Vorrichtung nach irgendeinem vorhergehenden Anspruch, bei der die Gatterschaltung (15) betriebsfähig ist, um den optischen Schalter (18) so zu schalten, daß Licht von der Lichtquelle (1) das Fokussiermittel (2) nicht erreicht, wenn eine Videosignalbitfolge, in Abhängigkeit von der das Modulationssignal,bereitgestellt wird, eine Folge von Bits von wenigstens einer vorbestimmten Länge enthält, bei der es nicht erforderlich ist, Licht von dem akusto-optischen Lichtmodulationsmittel (4) zuzuführen.

12. Vorrichtung nach Anspruch 11, bei der die vorbestimmte Länge acht Bit beträgt.

## Revendications

1. Appareil de balayage optique, qui comprend:
une source lumineuse (1),
un moyen de focalisation (2), conçu pour focaliser la lumière issue de la source lumineuse,
un moyen de modulation acousto-optique (4), conçu pour recevoir la lumière focalisée qui provient du moyen de focalisation, et qui a pour fonction de commuter la lumière qui le traverse, et
un circuit d'attaque de modulateur (3) pour fournir un signal de modulation au moyen de modulation acousto-optique afin de commuter la lumière qui le traverse,
caractérisé en ce qu'il comporte:
un commutateur optique (18) disposé entre la source de lumière (1) et le moyen de focalisation (2), et qui a pour fonction de commuter la lumière qui est transmise vers le moyen de focalisation, et
un circuit à portes (15) qui a pour fonction de commander de façon électronique le commutateur optique.

2. Appareil selon la revendication 1, dans lequel le commutateur optique comprend un moyen de modulation acousto-optique (14).

3. Appareil selon la revendication 2, dans lequel le moyen de modulation acousto-optique (14) du commutateur optique est un dispositif sensiblement similaire au moyen de modulation acousto-optique (4) qui reçoit la lumière focalisée.

4. Appareil selon l'une quelconque des revendications 1, 2, ou 3, qui comprend de plus un moyen de réflexion de la lumière (6), conçu pour réfléchir la lumière qui lui est fournie via le moyen de modulation acousto-optique (4) qui reçoit la lumière focalisée, la lumière réfléchie étant balayée par la rotation du moyen de réflexion de la lumière.

5. Appareil selon la revendication 4, dans lequel le moyen de réflexion de la lumière comprend des miroirs polygonaux tournants.

6. Appareil selon la revendication 4, dans lequel le moyen de réflexion de la lumière comprend un miroir de galvanomètre.

7. Appareil selon l'une quelconque des revendications 1, 2, ou 3, qui comprend de plus un moyen sensible à la lumière (8), pour produire sur ce moyen une image électrostatique en réponse à la réception de la lumière qui lui est fournie via le moyen de modulation acousto-optique (4) qui reçoit la lumière focalisée.

8. Appareil selon la revendication 7, dans lequel le moyen sensible à la lumière est un tambour photosensible sur une ligne duquel la lumière doit être focalisée de façon uniforme .

9. Appareil selon l'une quelconque des revendications 1 à 8, dans lequel le circuit à portes (15) comprend:
un circuit de commutation (13) qui est conçu pour recevoir le signal de modulation fourni par le circuit d'attaque de modulateur (3), et qui a pour fonction de commuter ce signal entre le commutateur optique et le moyen de modulation acousto-optique (4) qui reçoit la lumière focalisée, et vice et versa,
un circuit local à portes (11, 12) qui a pour fonction de commander le circuit de commutation et pour valider le circuit d'attaque de modulateur.

10. Appareil selon l'une quelconque des revendications 1 à 9, dans lequel le circuit à portes (15) a pour fonction de commuter le commutateur optique (18) de sorte que la lumière issue de la source lumineuse (1) n'atteint pas le moyen de focalisation (2) lorsque l'appareil se trouve en situation d'attente.

11. Appareil selon l'une quelconque des revendications 1 à 10, dans lequel le circuit à portes (15) a pour fonction de commuter le commutateur optique (18) de sorte que la lumière issue de la source lumineuse (1) n'atteint pas le moyen de focalisation (2) lorsqu'un train de bits d'un signal vidéo, en fonction duquel le signal de modulation est produit, contient une séquence de bits, d'au moins une longueur prédéterminée, pour laquelle il n'est pas nécessaire que la lumière soit fournie par le moyen de modulation acousto-optique (4).

12. Appareil selon la revendication 11, dans lequel la longueur prédéterminée est de huit bits.
